# EUROPEAN PATENT SPECIFICATION

(11) **EP 0 896 993 B1**
(45) Date of publication and mention of the grant of the patent: **18.02.2004**
(21) Application number: 98114808.3
(22) Date of filing: 06.08.1998
(51) Int. Cl.: C09J 133/06, C09J 7/02

(54) **Acrylic pressure sensitive adhesive composition**
Druckempfindliche Acrylklebemittel-Zusammensetzung
Composition acrylique d'adhésif sensible à pression

(30) Priority: 08.08.1997 JP 21482597
(43) Date of publication of application: 17.02.1999
(73) Proprietor: Rikidyne Co., Ltd., Gose-shi, Nara 639-2261 (JP)
(72) Inventor: Tanaka, Katsuaki, Osaka 543-0043 (JP); Hayashi, Yoshihisa, Higashiosaka-shi, Osaka 577-0817 (JP); Yoshida, Kusutaro, Sakai-shi, Osaka 5910-0143 (JP)
(74) Representative: Sama, Daniele, Dr.

(56) References cited:
- EP-A- 0 379 932
- EP-A- 0 621 290
- PATENT ABSTRACTS OF JAPAN vol. 011, no. 379 (C-463), 10 December 1987 & JP 62 149776 A (NITTO ELECTRIC IND CO LTD), 3 July 1987
- SVANTESSON, ALBINSSON, MELANDER: "ionic conductivity ..." ZEITSCHRIFT FUR NATURFORSCHUNG, TEIL A, vol. 44, no. 12, 1989, pages 1231-3, XP002085206 TUBINGEN DE

## Description

The present invention relates to an acrylic pressure sensitive adhesive (hereinafter referred to as an acrylic adhesive) composition, an adhesive tape and a process for forming an adhesive layer. More particularly, the present invention relates to an acrylic adhesive composition capable of providing an adhesive layer having an improved high moisture permeability in comparison with use of conventional acrylic adhesive compositions, an adhesive tape and a process for forming an adhesive layer.

The acrylic adhesive composition of the present invention can be aptly used for forming an adhesive layer for a medical tape, an insulating tape, a packaging tape, a masking tape and the like.

Conventionally known are adhesives containing an adhesive component (a solid component) such as a natural rubber, a synthetic rubber, a (meth)acrylic polymer or the like as a main component. Adhesives of solution type, aqueous emulsion type, hot-melt type and the like are known. Among such adhesives, the solution-type adhesive is generally composed of an organic solution and a solid adhesive component capable of being solved or dispersed in the organic solution.

Adhesive tapes include at least two layers including a base such as a film and an adhesive layer. The adhesive layer is formed by a known method of applying an adhesive onto release paper, drying the adhesive to form an adhesive layer and then transferring the adhesive layer onto a base such as a film, or by a known method of applying an adhesive onto a base and then drying the adhesive to form an adhesive layer.

As an acrylic adhesive, for example, Japanese Patent Publication No. SHO63(1988)-28114 discloses an adhesive composed of a mixture of polyvinyl lactam and a (meth)acrylic ester/ethylene unsaturated acid copolymer. Further, Japanese Unexamined Patent Publication No. HEI 2(1990)-113080 discloses an adhesive composed of a mixture of a poly(meth)acrylic ester and a vinyl acetate/vinyl lactam copolymer.

When the acrylic adhesive is used for a medical tape, the acrylic adhesive must have sufficient adhesion so that the tape can keep sticking on skin (an adherend). For this reason, usually, the acrylic adhesive is formed into an adhesive layer of about 25 µm to 35 µm thick. The tape, if kept attached to skin for a long time, may cause unpleasant reactions such as rash and itch. For avoiding such reactions, it is desired that the adhesive layer have a sufficient moisture permeability. To sum up, desired is an adhesive which can provide a sufficient adhesion and a good moisture permeability when the medical tape is used.

After intensive study especially on acrylic adhesives (pressure sensitive adhesives) among various kinds of adhesives, the inventors of the present invention have found that addition of polypropylene glycol to an acrylic adhesive improves the moisture permeability of an adhesive layer formed of the acrylic adhesive remarkably. Liquid polypropylene glycol is compatible with various organic solvents. Accordingly, liquid polypropylene glycol is generally used as a pharmaceutical binder, a base for a medical ointment, an extraction solvent, a resin solvent or the like. However, it still remains to be elucidated what mechanism leads to the above-mentioned improvement in moisture permeability of the adhesive layer. The improvement is considered as quite an unexpected result. The inventors have also found that use of N-vinylpyrrolidone to form an adhesive component of the acrylic adhesive composition further improves the moisture permeability of the adhesive layer.

Accordingly, the present invention provides an acrylic pressure sensitive adhesive composition containing 5wt% to 60 wt% of a (meth)acrylic polymer, 5 to 25 parts by weight polypropylene glycol with respect to 100 parts by weight of the (meth)acrylic polymer, a solvent and optionally an additive, the solvent adjusting the whole composition to 100wt%.

Further, the present invention provides an adhesive tape wherein a pressure sensitive adhesive layer is formed of the acrylic pressure sensitive adhesive on a base.

Still further, the present invention provides a process for forming a pressure sensitive adhesive layer having an improved moisture permeability. The process comprises adding 5 to 25 parts by weight of polypropylene glycol with respect to 100 parts by weight of a (meth)acrylic polymer, thereby to raise the moisture permeability of the pressure sensitive adhesive layer substantially.

The acrylic adhesive composition of the present invention is aptly used for forming an adhesive layer having moisture permeability on a base.

The (meth)acrylic polymer as the adhesive component of the present invention may be any polymer used in the field. Examples of such polymers include homopolymers made of monomers selected from (meth)acrylic monomers such as (meth)acrylic acid; alkyl (meth)acrylates such as methyl (meth)acrylate, ethyl (meth)acrylate, butyl (meth)acrylate, 2-ethylhexyl (meth)acrylate and iso-octyl (meth)acrylate; mono(meth)acrylates such as 2-hydroxyethyl (meth)-acrylate; di(meth)acrylates such as diethylene glycol di(meth)acrylate and hexanediol di(meth)acrylate; tri(meth)acrylates such as pentaerythritol tri(meth)acrylate; (meth)acrylamides such as (meth)acrylamide and N,N-dimethyl(meth)acrylamide; and multifactorial polymers such as copolymers and terpolymers made of two or more kinds of monomers selected from the above-mentioned (meth)acrylic monomers. Further, examples of usable polymers include copolymers of the above-mentioned (meth)acrylic monomer and a vinyl compound other than the (meth)acrylic monomer such as vinyl acetate, N-vinylpyrrolidone, N-vinylpiperidone, N-vinylcaprolactam or styrene.

Also usable as the (meth)acrylic polymer is any adhesive described on pages 435 to 494, Chapter "Acrylic Pressure Sensitive Adhesive" of "Handbook of Pressure Sensitive Adhesive Technology" (published by Nikkan Kogyo Shinbunsha of Japan on March 31, 1997), especially any polymer which can be obtained from monomers described on pages 488 to 494 thereof.

Further, the above-described copolymer may be mixed with one or a plurality of other kinds of polymers or copolymers. Examples of said other polymers and copolymers include the above-described copolymers and polymers obtained from the above-described monomers.

Among the above-described (meth)acrylic polymers, polymers which contain a component derived from N-vinylpyrrolidone are preferable. The component derived from N-vinylpyrrolidone is contained preferably in 1 to 10 parts by weight, more preferably in 3 to 8 parts by weight, with respect to 100 parts by weight of the (meth)acrylic polymer.

The (meth)acrylic polymer may have either block structure or random structure.

Here, among the above-described (meth)acrylic polymers, a copolymer of N-vinylpyrrolidone (meth)acrylic monomer is particularly preferred. Alternatively, a mixture of a copolymer of the N-vinylpyrrolidone/(meth)acrylic monomer with a (meth)acrylic polymer not containing the component derived from N-vinylpyrrolidone can also be aptly used.

In the acrylic adhesive composition of the present invention, polypropylene glycol is contained. By containing polypropylene glycol, the acrylic adhesive composition can provide a sufficient moisture permeability to an adhesive layer formed thereof later. Polypropylene glycols of various number-average molecular weights are available depending on their degrees of polymerization, but the polypropylene glycol usable in the present invention may have a number-average molecular weight of 400 to 6,000, preferably 400 to 4,000, specifically 400, 1,000, 2,000, 3,000 and 4,000. Particularly, it is preferable to use a polypropylene glycol whose number-average molecular weight is 2,000 or more, still preferable to use a polypropylene glycol whose number-average molecular weight is 2,000 to 4,000. If a polypropylene glycol whose number-average molecular weight is below 2,000 is used, the adhesive layer formed later may remain on the surface of an adherend when the adhesive layer is peeled off. However, for a use not requiring the peeling-off of the adhesive layer or for a use to which a remaining adhesive layer is not a problem, a polypropylene glycol having a number-average molecular weight below 2,000 may be used. Additionally, Newpole Series PP-4000, PP-3000, PP-2000, PP-1000, and PP-400 (trade names) produced by Sanyo Chemical Industries, Ltd. of Japan may be used as polypropylene glycol in the present invention, for example.

Polypropylene glycol is added in a proportion of 5 to 25 parts by weight to 100 parts by weight of the (meth)acrylic polymer. An addition amount below 5 parts by weight is not preferable because a desired moisture permeability cannot be provided to the adhesive layer formed later. On the other hand, with an addition amount over 35 parts by weight a normal adhesive layer can hardly be formed. A preferable addition amount of polypropylene glycol is within the range from 10 to 25 parts by weight. Within this range, there are few cases where the adhesive layer remains on the adherend. However, as already discussed, for an application to which the remaining of the adhesive layer does not matter, an addition amount out of this range can be used

The (meth)acrylic polymer may be contained in the acrylic adhesive composition of the present invention either in the form of soluticn type or of water dispersion type. In the form of solution type, the (meth)acrylic polymer is solved or dispersed in an organic solvent. In the form of water dispersion type, the (meth)acrylic is dispersed in water. The content of the (meth)acrylic polymer in the acrylic adhesive composition is 5wt% or higher. The maximum content is not particularly limited, but the content is 60wt% or lower because the acrylic adhesive composition containing the (meth)acrylic polymer in a high proportion is difficult to handle.

More particularly, when the adhesive composition is used for forming an adhesive layer on a masking tape, the adhesive composition contains preferably 5wt% to 20wt%, more preferably 5wt% to 15wt%, of the (meth)acrylic polymer. When the adhesive composition is used for forming an adhesive layer on a double-sided tape, the adhesive composition contains preferably 40wt% to 60wt%, more preferably 45wt% to 55wt%, of the (meth)acrylic polymer. When the adhesive composition is used for forming an adhesive layer on a medical tape, the adhesive composition contains preferably 30wt% to 60wt%, more preferably 35wt% to 55wt%, of the (meth)acrylic polymer.

As the organic solvent in the solution-type acrylic adhesive composition, any solvent known in the field can be used, and examples thereof include toluene, xylene, hexane and ethyl acetate.

A crosslinker (an optional component) may optionally be added to the acrylic adhesive composition for the purpose of enhancing cohesive power and improving adhesion to the adherend. As crosslinkers, isocyanate crosslinkers are preferably used. Examples of such crosslinkers are tolylene diisocyanate (TDI), diphenylmethane diisocyanate (MDI), toluidine diisocyanate (TODI), xylylene diisocyanate (XDI), hexamethylene diisocyanate (HMDI), an addition product of trimethylolpropane (TMP) with TDI, polyfunctional aromatic polyisocyanates (TDI polymers), polymethylene polyphenyl isocyanate and partially modified compounds thereof. The crosslinker, when added to the solution-type acrylic adhesive composition, is preferably contained in 0.05 to 5 parts by weight with respect to 100 parts by weight of the (meth)acrylic polymer. Other crosslinkers include those usable for crosslinking (meth)acrylic polymers such as aziridine crosslinkers, epoxy crosslinkers, metal chelate crosslinkers, melamine crosslinkers and modified isocyanate crosslinkers disclosed by Japanese Patent Publication No. HEI6(1984)- 99671.

In addition to crosslinkers, other additives can be added.

As additives, we can mention stabilizers, colorants, fillers, plasticizers and tackifier resins. These additives are usually used in the field of art and may optionally be added as optional components to the acrylic adhesive composition of the present invention.

In another aspect, the present invention provides an adhesive tape having an adhesive layer formed of the above-described acrylic adhesive composition on a base. The adhesive layer can be formed by any method known in the field of art. For example, the adhesive layer is formed by applying the acrylic adhesive composition on release paper, followed by drying, thereby to form the adhesive layer and then transforming the adhesive layer onto the base such as film, or by applying the acrylic adhesive composition on the base, followed by drying, thereby to form the adhesive layer.

Here, paper, woven fabric, nonwoven fabric, a plastic film and a metal foil to which moisture permeability is given, and the like can be used as the base. There are some cases where it is difficult to apply the solution-type acrylic adhesive composition, as it is, on the base. In such cases, a solvent such as toluene, xylene, hexane or ethyl acetate may preferably be added to reduce the viscosity of the composition before use.

The application of the composition can be done by reverse-roll coating, knife-over-roll coating, roll-over-roll coating, for example. The drying of the composition may be performed by single-stage drying or by multi-stage drying at such temperature that properties of the components of the acrylic adhesive composition do not change, for example, within the range of 40°C to 120°C.

Preferably, the adhesive layer formed by the above-mentioned manner has a thickness of 1 µm to 70 µm. If the adhesive layer is thinner than 1 µm, the adhesive power is often insufficient. If the adhesive layer is thicker than 70 µm, the moisture permeability declines and also the adhesive layer often remains on the surface of the adherend after peeled off. Particularly, in the field of medical adhesive tapes, the adhesive layer is preferably 10 µm to 60 µm in thickness, more preferably 10 µm to 40 µm in thickness, still more preferably 25 µm to 35 µm.

The adhesive layer obtained from the acrylic adhesive composition of the present invention preferably has a moisture permeability of 1,000g/m²·24hours or higher, though the moisture permeability varies depending on the thickness of the adhesive layer.

The acrylic adhesive composition of the present invention can be used for applications such as medical tapes, insulating tapes, packaging tapes and masking tapes.

Further, the present invention provides a process for forming an adhesive layer having an improved moisture permeability. The process includes adding 5 to 35 parts by weight of polypropylene glycol with respect to 100 parts by weight of the (meth)acrylic polymer, thereby to substantially raise the moisture permeability of the adhesive layer formed of the adhesive composition.

The following examples are only given for illustrative purposes.

### EXAMPLES

The present invention is now described further in detail by examples and comparative examples. In the description of the examples, the "parts" means "parts by weight" unless otherwise indicated.

In the examples and comparative examples, the moisture permeability and the adhesive power were determined in the following manner.

### (1) Moisture Permeability

A characteristic of letting through gas is called gas permeability. A characteristic of letting through water vapor, a kind of gas, is moisture permeability. In the following examples, degrees of moisture permeability are represented by values measured in accordance with JIS (Japanese Industrial Standard) L1099 A-2.

### (2) Adhesive Power

Acrylic adhesive compositions were applied to release paper, followed by drying. Then they were transferred to bases and allowed to age at 40°C for 3 days to form adhesive layers. These adhesive layers were applied on frosted glass (adherend) of 3mm thick by rolling a rubber roller weighing 2kg to and fro once immediately after that, force (g value) necessary for peeling the adhesive layers off at 300mm/minute at an angle of 180° (180° peel) was measured under an environment of 23°C and 65%RH. The obtained values is referred to as adhesive strength (g/25mm width).

The bases to which the adhesive layers were transferred were extruded polyurethane films having a thickness of 25 µm and a moisture permeability of 2,080g/m²·24hours (produced by Ohkura Kogyo Company).

### Example 1

A mixture of 56.8 parts of 2-ethylhexyl acrylate, 35 parts of butyl acrylate, 3 parts of acrylic acid, 0.2 parts of 2-hydroxyethyl methacrylate, 5 parts of vinylpyrrolidone, 0.2 parts of a polymerization initiator (azobisisobutyronitrile, AIBN), and 36 parts of toluene and 86 parts of ethyl acetate as solvents was allowed to polymerize by a usual way. As a result of this polymerization reaction an acrylic adhesive was obtained which had about 45 wt% meth)acrylate polymer (solid content) and a viscosity of about 5 Pa.s (5,000 cps). This acrylic adhesive is hereafter referred to as A-5, in which 5 parts of N-vinylpyrrolidone are contained in the copolymer.

Then, to 100 parts (in terms of solid content) of the acrylic adhesive A-5, added were 3.7 parts of Coronate L-55E (Nippon Polyurethane Industry CO., Ltd.) and 22 parts of Newpole PP4000 (produced by Sanyo Chemical Industries, Ltd, having a number-average molecular weight of 4000) as an isocyanate crosslinker and polypropylene glycol, respectively. The resulting mixture was stirred and then allowed to stand for defoaming. Thus an acrylic adhesive composition was obtained.

This acrylic adhesive composition was applied on release paper K-80HS (produced by San'ei Kaken Company) and dried at 100°C for 2 minutes to form an adhesive layer, which was about 25 µm in thickness after drying.

This adhesive layer was transferred to a base and allowed to age at 40°C for 3 days thereby to produce an adhesive tape. Then, after peeling off the release paper, the moisture permeability and adhesive strength of the adhesive tape was determined in the above-described manner.

The results are shown in Table 1 together with a peeled-off state observed with the eye, the blending proportion in the acrylic adhesive composition and the thickness of the adhesive layer,

### Comparative Example 1

An adhesive tape was prepared in the same manner as in Example 1 except that polypropylene glycol was not used in Comparative Example 1. The moisture permeability and adhesive strength thereof were determined. The results are shown in Table 1 together with the peeled-off state observed with the eye, the blending proportion the acrylic adhesive composition and the thickness of the adhesive layer.

### Examples 2 and 3

Adhesive tapes were prepared in the same manner as in Example 1 except that the content of 2-ethylhexyl acrylate and N-vinylpyrrolidone in A-5 were changed to 58.8 parts and 3 parts, and 54.8 parts and 7 parts, respectively in Example 2 and in Example 3. The moisture permeability and adhesive strength thereof were determined. The results are shown in Table 1 together with the peeled-off state observed with the eye, the blending proportion in the acrylic adhesive compositions and the thickness of the adhesive layers. The acrylic adhesives in which the content of N-vinylpyrrolidone is 3 parts and 7 parts are referred to as A-3 (Example 2) and A-7 (Example 3), respectively.

### Comparative Examples 2 and 3

Adhesive tapes of Comparative Examples 2 and 3 were prepared in the same manner as in Examples 2 and 3, respectively, except that polypropylene glycol was not added in these comparative examples. The moisture permeability and adhesive strength thereof were determined. The results are shown in Table 1 together with the peeled-off state observed with the eye, the blending proportion in the acrylic adhesive compositions and the thickness of the adhesive layers.

### Examples 4 to 7

Adhesive tapes were prepared in the same manner as in Example 1 except that polypropylene glycols whose number-average molecular weights were 3,000, 2,000, 1,000 and 400 (Newpole PP3000, PP2000, PP1000 and PP400, respectively, produced by Sanyo Chemical Industries, Ltd.) were used in Example 4, Example 5, Example 6 and Example 7, respectively. The moisture permeability and adhesive strength thereof were determined. The results are shown in Table 1 together with the peeled-off state observed with the eye, the blending proportion in the acrylic adhesive compositions and the thickness of the adhesive layers.

### Examples 8 to 9

Adhesive tapes were prepared in the same manner as in Example 1 except that the addition amount of polypropylene _{.} glycol was increased to 33 parts and decreased to 11 parts in Example 8 and Example 9, respectively. The moisture permeability and adhesive strength thereof were determined. The results are shown in Table 1 together with the peeled-off state observed with the eye, the blending proportion in the acrylic adhesive compositions and the thickness of the adhesive layers.

### Examples 10 to 15

Adhesive tapes were prepared in the same manner as in Example 1 except that the thickness of the adhesive layers after drying were 10 µm, 20 µm, 25 µm, 30 µm, 40 µm and 50 µm in Example 10, Example 11, Example 12, Example 13, Example 14 and Example 15, respectively, and that the addition amount of polypropylene glycol and the crosslinker were 11 parts and 1.8 parts, respectively. The moisture permeability and adhesive strength thereof were determined. The results are shown in Table 1 together with the peeled-off state observed with the eye, the blending proportion in the acrylic adhesive compositions and the thickness of the adhesive layers.

### Example 16

A mixture of 70 parts of 2-ethylhexyl acrylate, 26.8 parts of vinyl acetate, 3 parts of acrylic acid, 0.2 parts of 2-hydroxyethyl methacrylate, 0.2 parts of a polymerization initiator (AIBN), and 73 parts of toluene and 49 parts of ethyl acetate as solvents was allowed to polymerize by a usual way. As a result of this polymerization reaction, an acrylic adhesive was obtained which had about 45 wt% solid content and a viscosity of about 8 Pa.s (8,000 cps). This acrylic adhesive is hereafter referred to as B-0.

An adhesive tape was prepared in the same manner as in Example 1 except that B-0 was used as an acrylic adhesive. The moisture permeability and adhesive strength thereof were determined. The results are shown in Table 2 together with the peeled-off state observed with the eye, the blending proportion in the acrylic adhesive composition and the thickness of the adhesive layer.

### Comparative Example4

An adhesive tape was prepared in the same manner as in Example 16 except that polypropylene glycol was not used in this comparative example 4. The moisture permeability and adhesive strength thereof were determined. The results are shown in Table 2 together with the peeled-off state observed with the eye, the blending proportion in the acrylic adhesive composition and the thickness of the adhesive layer.

### Examples 17 to 19

Seventy (70) parts of methyl acrylate, 30 parts of N-vinylpyrrolidone, 0.2 parts of a polymerization initiator (AIBN), 61 parts of ethyl acetate and 61 parts of toluene were allowed to polymerize in a usual manner. As a result of this polymerization reaction, N-vinylpyrrolidone/methyl acrylate copolymer containing about 45.0 wt% solid content and having a viscosity of about 5.5 Pa.s (5,500 cps) was obtained. This copolymer is hereafter referred to as VP/MA.

Adhesive tapes were prepared in the same manner as in Example 16 except that 10 parts, 16.5 parts and 23 parts of this VP/MA were added in Example 17, in Example 18 and in Example 19, respectively. The moisture permeability and adhesive strength, thereof were determined. The results are shown in Table 2 together with the peeled-off state observed with the eye, the blending proportion in the acrylic adhesive compositions and the thickness of the adhesive layers.

### Comparative Examples 5 to 7

Adhesive tapes of Comparative Examples 5, 6 and 7 were prepared in the same manner as in Examples 17, 18 and 19, respectively, except that polypropylene glycol was not used in these comparative examples. The moisture permeability and adhesive strength thereof were determined. The results are shown in Table 2 together with the peeled-off state observed with the eye, the blending proportion in the acrylic adhesive compositions and the thickness of the adhesive layers.

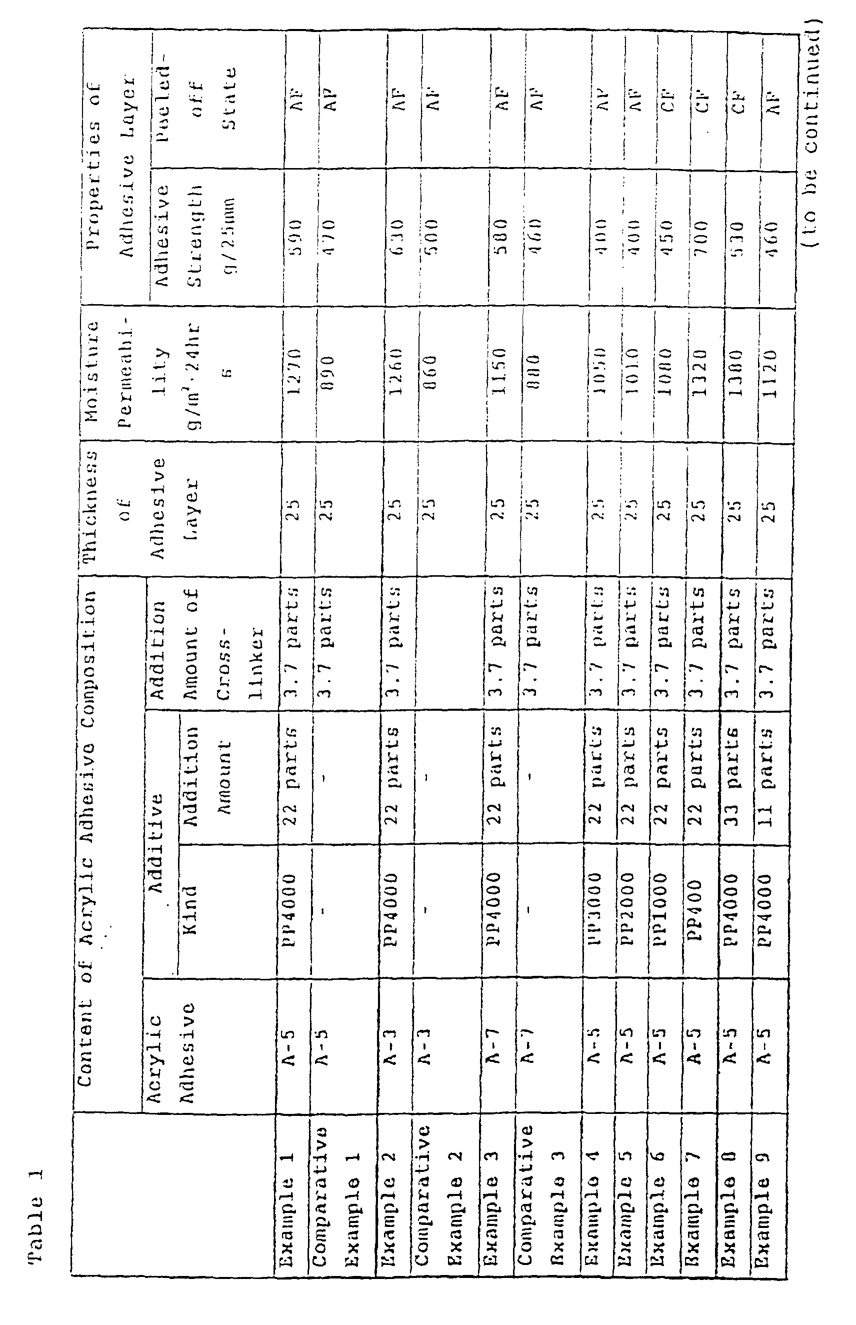

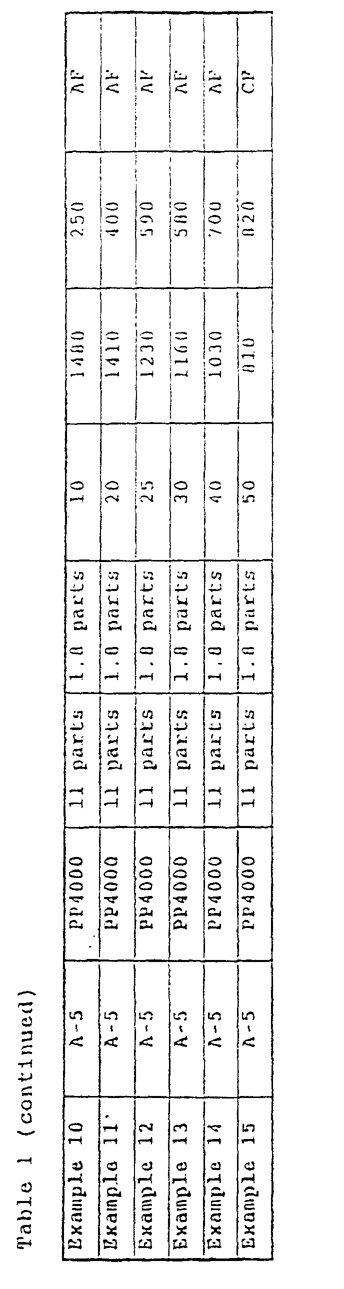

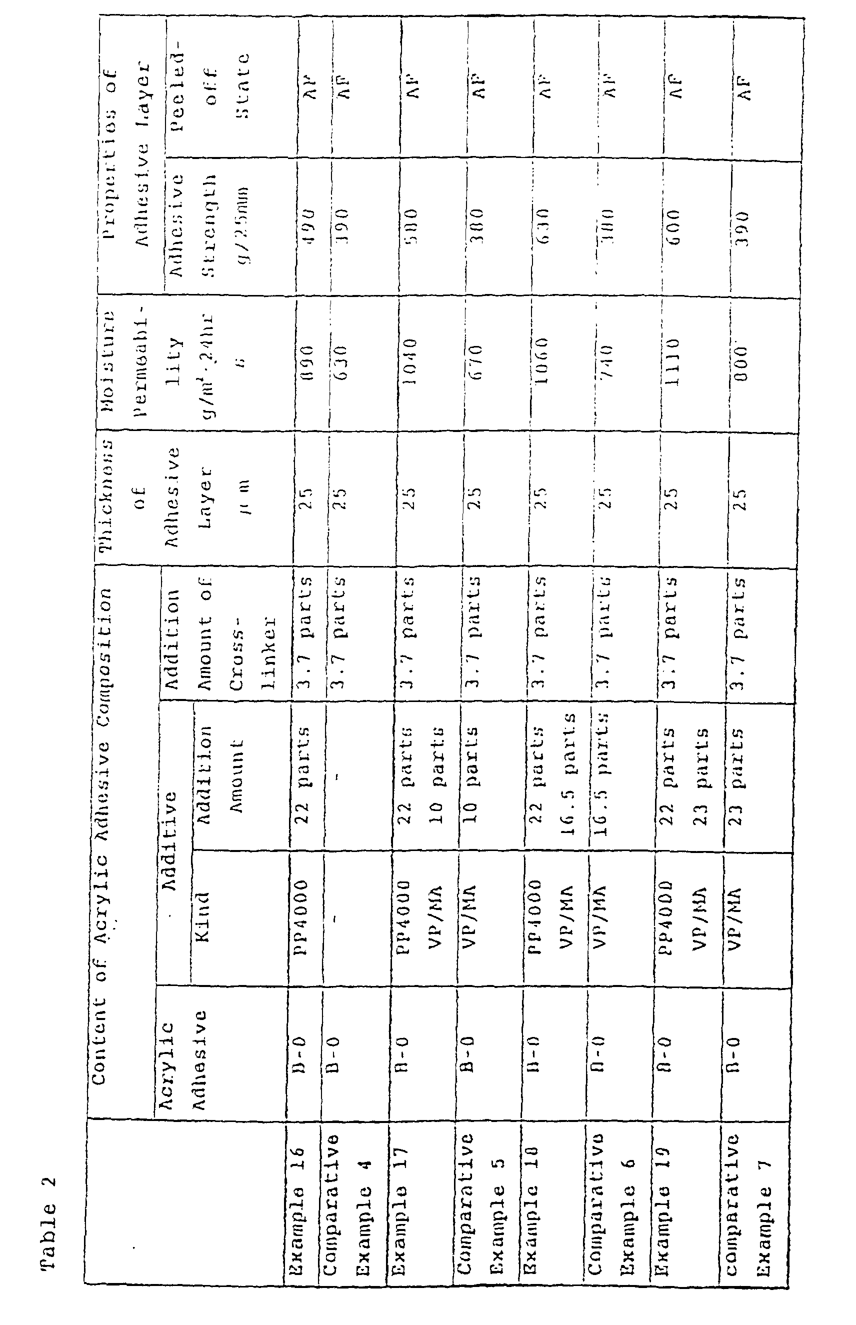

### Examples 20 to 22

The adhesive tapes of Examples i, 9 and 12 were applied in Examples 20, 21 and 22, respectively, and then received a pressure of 80g/cm² was put thereon at 40°C for 10 days.

The moisture permeability, adhesive strength and peeled-off state with the eye of the adhesive tapes after putting the pressure are shown in Table 3.

**Table 3**

| | Moisture Permeability g/m²·24 hours | Properties of Adhesive Layer | |
|---|---|---|---|
| | | Adhesive Strength g/25mm | Peeled-off State |
| Example 20 | 1,160 | 570 | AF |
| Example 21 | 1,050 | 430 | AF |
| Example 22 | 1,020 | 550 | AF |

In Tables 1 to 3, "AF" means that the adhesive layer was peeled off at the interface of the adherend, and "CF" means that the adhesive layer made cohesive failure and remained on the surface of the adherend.

Table 4 shows the proportion of the respective raw materials for forming the acrylic adhesive compositions of Examples 1 to 19.

**Table 4**

| | WT% | | | | | |
|---|---|---|---|---|---|---|
| Examples | (Meth) acrylic polymer | N-vinyl pyrrolido ne | Polypropylene glycol | Solvent | Polymerization initiator | Cross-linker |
| 1.4 - 7 | 38.3 | 2.0 | 8.9 | 49.2 | 0.1 | 1.5 |
| 2 | 39.1 | 1.2 | 8.9 | 49.2 | 0.1 | 1.5 |
| 3 | 37.5 | 2.8 | 8.9 | 49.2 | 0.1 | 1.5 |
| 8 | 36.7 | 1.9 | 12.8 | 47.1 | 0.1 | 1.4 |
| 9 | 40.1 | 2.1 | 4.5 | 51.5 | 0.1 | 1.6 |
| 10 - 15 | 40.4 | 2.1 | 4.7 | 51.9 | 0.1 | 0.8 |
| 16 | 40.3 | - | 8.9 | 49.2 | 0.1 | 1.5 |
| 17 | 40.0 | 0.5 | 8.5 | 49.5 | 0.1 | 1.4 |
| 18 | 39.8 | 0.8 | 8.3 | 49.6 | 0.1 | 1.4 |
| 19 | 39.6 | 1.1 | 8.1 | 49.7 | 0.1 | 1.4 |

Tables 1 to 3 show the following.

Comparison, of Example 1 with Comparative Example 1 and comparison of Example 16 with Comparative Example 4 show that the addition of polypropylene glycol improves the moisture permeability with both the acrylic adhesive composition containing copolymerized N-vinylpyrrolidone and the acrylic adhesive composition not containing N-vinylpyrrolidone.

The acrylic adhesive composition containing copolymerized N-vinylpyrrolidone has a higher moisture permeability than the acrylic adhesive composition not containing N-vinylpyrrolidone (see Comparative Examples 1 and 4). It is found that a remarkably high moisture permeability (not lower than 1,000g/m²·24hours) can be obtained by adding polypropylene glycol to the acrylic adhesive containing copolymerized N-vinylpyrrolidone (see Example 1).

Comparative Examples 4 and 6 show that the moisture permeability can be improved to some extent by mixing the acrylic adhesive composition not containing N-vinylpyrrolidone with a copolymer containing N-vinylpyrrolidone as a component. However, Example 18 shows that a remarkably high moisture permeability can be obtained by further adding polypropylene glycol.

Examples 1 and 4 to 7 show that where the number-average molecular weight of polypropylene glycol is 1,000 or below, the adhesive layer remains on the surface of the adherend when the adhesive layer was peeled off. Accordingly, for an application in which the remaining of the adhesive layer is not desired, the number-average molecular weight is preferably 2,000 or more. Further, it is found that the most preferable acrylic adhesive composition can be obtained by use of a polypropylene glycol whose number-average molecular weight is 4,000.

Examples 10 to 15 show that the adhesive layer preferably has a thickness of 10 µm to 40 µm in view of good moisture permeability and peeled-off state.

Examples 1 to 3 and Comparative Examples 1 to 3 show that, where the content of the component derived from N-vinylpyrrolidone in the copolymer is within the range of 3wt% to 7 wt% with respect to 100 parts by weight of the (meth)acrylate polymer and polypropylene glycol is contained, an excellent effect on the moisture permeability can be obtained

Examples 17 to 19 and Comparative Examples 5 to 7 show that compared with the case where N-vinylpyrrolidone is contained as a copolymer, a similar effect can be obtained with regard to the moisture permeability

Examples 20 to 22 show that no practical problem is brought about to the moisture permeability, adhesive strength or peeled-off state observed with the eye after time passes with heating and pressuring.

### Example 23

The acrylic adhesive composition of Example 1 was diluted with 1,752.3 parts by weight of ethyl acetate to obtain an adhesive composition containing 5wt% (meth)acrylic polymer.

### Example 24

An acrylic adhesive composition was obtained in the same manner as in Example 1 except that the amount of toluene and ethyl acetate was decreased to 19.7 parts and 47.0 parts, respectively. This acrylic adhesive composition contained 60wt% (meth)acrylic polymer.

According to the present invention, it is possible to improve the moisture permeability of the adhesive layer obtained by the acrylic adhesive composition. The acrylic adhesive composition of the present invention can be suitably used for applications such as medical tapes, insulating tapes, packaging tapes, masking tapes and the like.

## Claims

1. An acrylic pressure sensitive adhesive composition containing 5wt% to 60wt% of a (meth)acrylic polymer, 5 to 25 parts by weight of polypropylene glycol with respect to 100 parts by weight of the (meth)acrylic polymer, a solvent, optionally additives, said solvent adjusting the whole composition to 100wt%.

2. An acrylic pressure sensitive adhesive composition according to claim 1, wherein the (meth)acrylic polymer contains a component derived from N-vinylpyrrolidone.

3. An acrylic pressure sensitive adhesive composition according to claims 1-2, wherein the polypropylene glycol has a number-average molecular weight of 400 to 6,000.

4. An acrylic pressure sensitive adhesive composition according to claim 3, wherein the polypropylene glycol has a number-average molecular weight of 2,000 to 4,000.

5. An acrylic pressure sensitive adhesive composition according to claims 2-5, wherein 100 parts by weight of the (meth)acrylic polymer contain 1 to 18 parts by weight of the component derived from N-vinylpyrrolidone.

6. An acrylic pressure sensitive adhesive composition according to claim 6, wherein 100 parts by weight of the (meth)acrylic polymer contain 3 to 8 parts by weight of the component derived from N-vinylpyrrolidone.

7. An adhesive tape comprising an adhesive layer formed of the acrylic pressure sensitive adhesive composition according to claims 1-7 on a base.

8. An adhesive tape according to claim 8, wherein the adhesive layer has a thickness of 10 µm to 40 µm.

9. An adhesive tape according to claim 9, wherein the adhesive tape is for medical use and the adhesive layer has a thickness of 25 µm to 35 µm.

10. An adhesive tape according to claims 8-10, wherein the adhesive layer has a moisture permeability of 1,000 g/m². 24 hours or higher.

11. A process for forming an adhesive layer having an improved moisture permeability comprising adding 5 to 25 parts by weight of polypropylene glycol to 100 parts by weight of a (meth)acrylic polymer according to the composition of claim 1, to raise the moisture permeability of the adhesive layer substantially.

12. A process according to claim 12, wherein the (meth)acrylic polymer contains a component derived from N-vinylpyrrolidone.

13. Use of an acrylic pressure sensitive adhesive composition according to claim 1, wherein the content of the (meth)acrylic polymer in the acrylic adhesive composition is 5wt% to 20wt% for forming an adhesive layer on a masking tape.

14. Use of an acrylic pressure sensitive adhesive composition according to claim 1, wherein the content of the (meth)acrylic polymer in the acrylic adhesive composition is 40wt% to 60wt% for forming an adhesive layer on a double-sided tape.

15. Use of an acrylic pressure sensitive adhesive composition according to claim 1, wherein the content of the (meth)acrylic polymer in the acrylic adhesive composition is 30wt% to 60wt% for forming an adhesive layer on a medical tape.

## Patentansprüche

1. Eine druckempfindliche Acryl-Klebemittel-Zusammensetzung, die folgendes enthält: 5 Gew% bis 60 Gew% eines (Meth)acrylpolymers, 5 bis 25 Gewichtsteile Polypropylenglykol in Bezug auf 100 Gewichtsteile des (Meth) acrylpolymers, ein Lösungsmittel, wahlweise Zusatzstoffe, wobei das Lösungsmittel die ganze Zusammensetzung auf 100 Gew% einstellt.

2. Eine druckempfindliche Acryl-Klebemittel-Zusammensetzung gemäß Anspruch 1, worin das (Meth)acrylpolymer eine Komponente enthält, die von N-Vinylpyrrolidon abgeleitet ist.

3. Eine druckempfindliche Acryl-Klebemittel-Zusammensetzung gemäß. Ansprüchen 1 bis 2, worin das Polypropylenglykol ein Zahlenmittel-Molekulargewicht von 400 bis 6000 hat.

4. Eine druckempfindliche Acryl-Klebemittel-Zusammensetzung gemäß Anspruch 3, worin das Polypropylenglykol ein Zahlenmittel-Molekulargewicht von 2000 bis 4000 hat.

5. Eine druckempfindliche Acryl-Klebemittel-Zusammensetzung gemäß Ansprüchen 2 bis 5, worin 100 Gewichtsteile des (Meth)acrylpolymers 1 bis 18 Gewichtsteile der Komponente enthalten, die von N-Vinylpyrrolidon abgeleitet ist.

6. Eine druckempfindliche Acryl-Klebemittel-Zusammensetzung gemäß. Anspruch 6, worin 100 Gewichtsteile des (Meth)acrylpolymers 3 bis 8 Gewichtsteile der Komponente enthalten, die von N-Vinylpyrrolidon abgeleitet ist.

7. Ein Klebemittelband, das eine Klebemittelschicht umfasst, die aus der druckempfindlichen Acryl-Klebemittel-Zusammensetzung gemäß Ansprüchen 1 bis 7 gebildet ist, auf einer Basis.

8. Ein Klebemittelband gemäß Anspruch 8, worin die Klebemittelschicht eine Dicke von 10 µm bis 40 µm hat.

9. Ein Klebemittelband gemäß Anspruch 9, worin das Klebemittelband für die medizinische Verwendung ist, und wobei die Klebemittelschicht eine Dicke von 25 µm bis 35 µm hat.

10. Ein Klebemittelband gemäß Ansprüchen 8 bis 10, worin die Klebemittelschicht eine Feuchtigkeitspermeabilität von 1000 g/m² pro 24 Stunden oder höher hat.

11. Ein Verfahren zum Bilden einer Klebemittelschicht, die eine verbesserte Feuchtigkeitspermeabilität hat, das das Hinzufügen von 5 bis 25 Gewichtsteilen Polypropylenglykol zu 100 Gewichtsteilen eines (Meth)acrylpolymers gemäß der Zusammensetzung von Anspruch 1 umfasst, um die Feuchtigkeitspermeabilität der Klebemittelschicht wesentlich zu erhöhen.

12. Ein Verfahren gemäß Anspruch 12, worin das (Meth)acrylpolymer eine Komponente enthält, die von N-Vinylpyrrolidon abgeleitet ist.

13. Die Verwendung einer druckempfindlichen Acryl-Klebemittel-Zusammensetzung gemäß Anspruch 1, worin der Gehalt des (Meth)acrylpolymers in der Acryl-Klebemittel-Zusammensetzung 5 Gew% bis 20 Gew% ist, zum Bilden einer Klebemittelschicht auf einem abdeckenden Band.

14. Die Verwendung einer druckempfindlichen Acryl-Klebemittel-Zusammensetzung gemäß Anspruch 1, worin der Gehalt des (Meth)acrylpolymers in der Acryl-Klebemittel-Zusammensetzung 40 Gew% bis 60 Gew% ist, zum Bilden einer Klebemittelschicht auf einem doppelseitigen Band.

15. Die Verwendung einer druckempfindlichen Acryl-Klebemittel-Zusammensetzung gemäß Anspruch 1, worin der Gehalt des (Meth)acrylpolymers in der Acryl-Klebemittel-Zusammensetzung 30 Gew% bis 60 Gew% ist, zum Bilden einer Klebemittelschicht auf einem medizinischen Band.

## Revendications

1. Composition acrylique d'adhésif sensible à la pression contenant de 5 à 60 % en poids d'un polymère (méth)acrylique, 5 à 25 parties en poids de polypropylèneglycol par rapport à 100 parties en poids du polymère (méth)acrylique, un solvant, éventuellement des additifs, ledit solvant ajustant la composition totale à 100 % en poids.

2. Composition acrylique d'adhésif sensible à la pression selon la revendication 1, dans laquelle le polymère (méth)acrylique contient un composant dérivé de la N-vinylpyrrolidone.

3. Composition acrylique d'adhésif sensible à la pression selon l'une quelconque des revendications 1 ou 2, dans laquelle le polypropylèneglycol a une masse moléculaire moyenne de 400 à 6000.

4. Composition acrylique d'adhésif sensible à la pression selon la revendication 3, dans laquelle le prolypropylèneglycol a une masse moléculaire moyenne de 2000 à 4000.

5. Composition acrylique d'adhésif sensible à la pression selon l'une quelconque des revendications 2 à 4, dans laquelle 100 parties en poids du polymère (méth)acrylique contiennent 1 à 18 parties en poids du composant dérivé de la N-vinylpyrrolidone.

6. Composition acrylique d'adhésif sensible à la pression selon la revendication 5, dans laquelle 100 parties en poids du polymère (méth)acrylique contiennent 3 à 8 parties en poids du composant dérivé de la N-vinylpyrrolidone.

7. Bande adhésive comprenant, sur une base, une couche adhésive formée de la composition acrylique d'adhésif sensible à la pression selon les revendications 1 à 6.

8. Bande adhésive selon la revendication 7, dans laquelle la couche adhésive a une épaisseur de 10 à 40 µm.

9. Bande adhésive selon la revendication 8, dans laquelle la bande adhésive est pour un usage médical et la couche adhésive a une épaisseur de 25 à 35 µm.

10. Bande adhésive selon les revendications 7 à 9, dans laquelle la couche adhésive a une perméabilité à l'humidité de 1000 g/m².24 heures ou supérieure.

11. Procédé de formation d'une couche adhésive ayant une perméabilité à l'humidité améliorée, comprenant l'addition de 5 à 25 parties en poids de polypropylèneglycol à 100 parties en poids d'un polymère (méth)acrylique selon la composition de la revendication 1, pour augmenter essentiellement la perméabilité à l'humidité de la couche adhésive.

12. Procédé selon la revendication 11, dans lequel le polymère (méth)acrylique contient un composant dérivé de la N-vinylpyrrolidone.

13. Utilisation d'une composition acrylique d'adhésif sensible à la pression selon la revendication 1, dans laquelle la teneur en polymère (méth)acrylique dans la composition acrylique d'adhésif est de 5 à 20 % en poids pour former une couche adhésive sur une bande de masquage.

14. Utilisation d'une composition acrylique d'adhésif sensible à la pression selon la revendication 1, dans laquelle la teneur en polymère (méth)acrylique dans la composition acrylique d'adhésif est de 40 à 60 % en poids pour former une couche adhésive sur une bande à double côté.

15. Utilisation d'une composition acrylique d'adhésif sensible à la pression selon la revendication 1, dans laquelle la teneur en polymère (méth)acrylique dans la composition acrylique d'adhésif est de 30 à 60 % en poids pour former une couche adhésive sur une bande médicale.
